(19) Europäisches Patentamt
European Patent Office
Office européen des brevets

(11) **EP 2 141 560 A2**

(12) **EUROPEAN PATENT APPLICATION**

(43) Date of publication:
06.01.2010   Bulletin 2010/01

(51) Int Cl.:
*G05B 17/02* (2006.01)     *G05B 19/4065* (2006.01)

(21) Application number: 09163683.7

(22) Date of filing: 24.06.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(30) Priority: 30.06.2008  US 165289

(71) Applicant: Honeywell International Inc.
Morristown, NJ 07962 (US)

(72) Inventors:
• Shetty, Pradeep
Morristown, NJ 07962-2245 (US)

• Mylaraswamy, Dinkar
Morristown, NJ 07962-2245 (US)
• Ekambaram, Thirumaran
Morristown, NJ 07962-2245 (US)

(74) Representative: Buckley, Guy Julian
Patent Outsourcing Limited
1 King Street
Bakewell
Derbyshire DE45 1DZ (GB)

(54) **System and method for predicting system events and deterioration**

(57)     A method of predicting deterioration in a mechanical device includes the steps of providing a health model for the mechanical device, the health model including a plurality of health states for modeling the mechanical device, receiving device data for the mechanical device, estimating values for the plurality of health states, based on the device data, predicting one or more events based on the health model and the device data, each of the one or more events affecting one or more of the plurality of health states, and generating a prediction of deterioration in the mechanical device from the estimated values for the plurality of health states and the one or more predicted events.

*120*

PROVIDE HEALTH MODEL — 122

RECEIVE DEVICE DATA — 124

ESTIMATING VALUES FOR HEALTH STATES — 126

ESTIMATING DETERIORATION — 128

PREDICTING EVENTS — 130

DETERMINING FEASIBLE PREDICTED EVENTS — 132

ESTIMATING UPDATED VALUES FOR HEALTH STATES — 134

ESTIMATING/UPDATING ESTIMATES OF DETERIORATION — 136

FIG. 2

**Description**

FIELD OF THE INVENTION

This invention generally relates to diagnostic methods and systems, and more specifically relates to prognosis methods and systems for mechanical systems.

BACKGROUND OF THE INVENTION

Modem mechanical systems can be exceedingly complex. The complexities of modern mechanical systems have led to increasing needs for automated prognosis and fault detection systems. These prognosis and fault detection systems are designed to monitor the mechanical system in an effort to predict the future performance of the system and detect potential faults. These systems are designed to detect these potential faults such that the potential faults can be addressed before the potential faults lead to failure in the mechanical system.

One type of mechanical system where prognosis and fault detection is of particular importance is aircraft systems. In aircraft systems, prognosis and fault detection can detect potential faults such that they can be addressed before they result in serious system failure and possible in-flight shutdowns, take-off aborts, delays or cancellations.

Some current prognosis and fault detection techniques have relied upon modeling of the mechanical system to predict future performance and detect likely faults. One limitation in these techniques has been the failure of the models to adequately predict events that may relate to faults and/or performance of the mechanical system and that may evolve over time. Furthermore, the models have failed to account for effects of dependencies faults of different components and/or with respect to time and/or events that may evolve over time. In such cases, the limitations in the model may reduce the ability to predict future performance and detect likely faults in the mechanical system.

Accordingly, it is desirable to provide an improved fault detection method for mechanical systems, for example that provides for the prediction of events that may evolve over time and/ or that account for effects of dependencies faults of different components and/or with respect to time and/or events that may evolve over time. It is also desirable to provide an improved fault detection program product for mechanical systems, for example that provides for the prediction of events that may evolve over time and/ or that account for effects of dependencies faults of different components and/or with respect to time and/or events that may evolve over time. It is further desirable to provide an improved fault detection system for mechanical systems, for example that provides for the prediction of events that may evolve over time and/ or that account for effects of dependencies faults of different components and/or with respect to time and/or events that may evolve over time. Furthermore, other desirable features and characteristics of the present invention will become apparent from the subsequent detailed description of the invention and the appended claims, taken in conjunction with the accompanying drawings and this background of the invention.

BRIEF SUMMARY OF THE INVENTION

In accordance with an exemplary embodiment of the present invention, a method of predicting deterioration in a mechanical device is provided. The method comprises the steps of providing a health model for the mechanical device, the health model including a plurality of health states for modeling the mechanical device, receiving device data for the mechanical device, estimating values for the plurality of health states, based on the device data, predicting one or more events based on the health model and the device data, each of the one or more events affecting one or more of the plurality of health states, and generating a prediction of deterioration in the mechanical device from the estimated values for the plurality of health states and the one or more predicted events.

In accordance with another exemplary embodiment of the present invention, a program product is provided. The program product comprises an event and deterioration prediction program and a computer-readable signal bearing media. The event and deterioration prediction program is configured to at least facilitate providing a health model for the mechanical device, the health model including a plurality of health states for modeling the mechanical device, receiving device data for the mechanical device, estimating values for the plurality of health states, based on the device data, predicting one or more events based on the health model and the device data, each of the one or more events affecting one or more of the plurality of health states, and generating a prediction of deterioration in the mechanical device from the estimated values for the plurality of health states and the one or more predicted events. The computer-readable signal bearing media bears the event and deterioration prediction program.

In accordance with yet another exemplary embodiment of the present invention, a deterioration and event prediction system for predicting deterioration in a mechanical device is provided. The deterioration and event prediction system comprises a memory and a processor. The memory is configured to store a health model for the mechanical device, the health model including a plurality of health states for modeling the mechanical device. The processor is coupled to the memory, and is configured to at least facilitate retrieving the health model from the memory; receiving device data for the mechanical device, estimating values for the plurality of health states, based on the device data;, predicting one or more events based on the health model and the device data, each of the one or more events affecting one or more of the plurality of health states, and generating a prediction of deterioration in the mechanical device from the estimated values for the plurality of health states and the one or more predicted events.

BRIEF DESCRIPTION OF THE DRAWINGS

The preferred exemplary embodiment of the present invention will hereinafter be described in conjunction with the appended drawings, where like designations denote like elements, and:

FIG. 1 is a schematic view of a deterioration and event prediction system, in accordance with an exemplary embodiment of the present invention;

FIG. 2 is a flowchart of a method for estimating deterioration and predicting events with respect to a mechanical device, in accordance with an exemplary embodiment of the present invention;

FIG. 3 is a schematic view of a model creation technique, in accordance with an exemplary embodiment of the present invention;

FIG. 4 is a schematic view of a deterioration prediction technique, in accordance with an exemplary embodiment of the present invention;

FIG. 5 is a schematic view of an event detection technique, in accordance with an exemplary embodiment of the present invention;

FIG. 6 is a schematic view of an updated deterioration prediction technique, in accordance with an exemplary embodiment of the present invention;

FIG. 7 is a graphical representation of observed data and resulting estimated health vectors incorporating the above deterioration and prediction system and the above methods and processes, in accordance with an exemplary embodiment of the present invention; and

FIG. 8 is schematic view of an exemplary computer system implementing a deterioration and event prediction system in accordance with an exemplary embodiment of the invention.

DETAILED DESCRIPTION OF THE INVENTION

The following detailed description is merely exemplary in nature and is not intended to limit the invention or the application and uses of the invention. Furthermore, there is no intention to be bound by any theory presented in the preceding background or the following detailed description.

The present invention provides a system and method for predicting deterioration in a mechanical device. The system and method uses a dynamic model and state estimator to predict deterioration in a mechanical device. The dynamic model includes a plurality of evolving health states that describe the performance of the mechanical device. The state estimator estimates the states of the dynamic model using periodic observations of the mechanical device and uses the estimation of the states to predict when the states will reach a predefined threshold that is sufficient to justify removal and/or repair of the mechanical device.

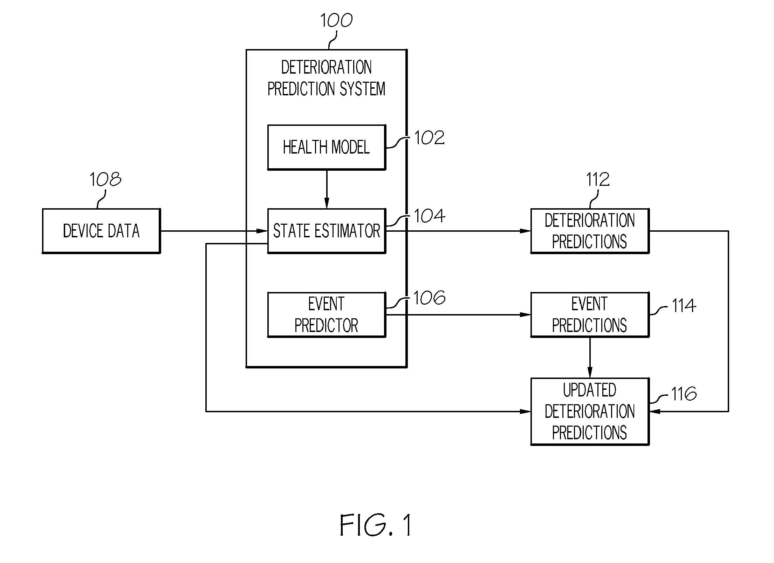

Turning now to FIG. 1, a schematic view of a deterioration and event prediction system 100 is illustrated. The deterioration and event prediction system 100 includes a health model 102, a state estimator 104, and an event predictor 106. The deterioration and event prediction system 100 receives device data 108 from the mechanical device under evaluation, and generates deterioration predictions 112, event predictions 114, and updated deterioration predictions 116 based on the device data 108 and the health model 102. The health model 102 comprises a dynamic model that includes a plurality of evolving health states. These health states together describe the performance of the mechanical device. Several factors contribute to the evolution of the health states. These factors include damage accumulation, interaction between components in the device, deviation from design conditions, and the influence of continuous or discrete events.

The state estimator 104 uses the health model 102 and the device data 108 from the mechanical device to estimate the states of the dynamic health model 102. The estimated states of the dynamic model can then be used to calculate the current deterioration in the mechanical device, and to predict future deterioration in the mechanical device. Specifically, the state estimator 104 drives the health model 102 using a non-Gaussian input that switches according to continuous or discrete events in the mechanical device. The resulting states of the dynamic health model 102 can then be used to evaluate deterioration in the mechanical device. In this respect, the states of the dynamic health model 102 are described as a stochastic (or random) variables and the state estimator 104 is used to estimate the mean and the variance of these stochastic variable. Thus, when the states reach a predefined threshold the deterioration may be sufficient to justify corrective action. Furthermore, the state estimator 104 can predict future deterioration by estimating future states in the health model 102. In one example, the system and method estimates future states of the health model 102 by integrating to a select future time. Thus, the state estimator 104 can be used to determine a repair window in which corrective action should be taken in anticipation of predicted future deterioration.

The event predictor 106 uses the health model 102 and the device data 108 from the mechanical device to generate event predictions 114. In a preferred embodiment, the event predictions 114 comprise predictions of the occurrence of discrete and continuous events, along with the evolution of continuous events, that are likely to have an effect on the health states and the deterioration predictions 112. The event predictions 114 are then used by the state estimator 104 in generating updated deterioration predictions 116 of current and future deterioration of the mechanical device that incorporate the effects on the mechanical device of the predicted occurrence of the discrete and continuous events and the predicted evolution of the predicted continuous events.

It will be appreciated that in certain embodiments the state estimator 104 and the event predictor 106 comprise or be a part of the same component, module, or unit, such as a processor of a computer system and/or another component, module, or unit of another type of device and/or system. In other embodiments, the state estimator 104 and the event predictor 106 may comprise or be part of one or more different components, modules, or units, such as different processors of a computer system or of different computer systems, and/or other different types of components, modules, or units of one or more other types of devices and/or systems.

It will also be appreciated that, in certain embodiments, the deterioration predictions 112, the event predictions 114, and/or the updated deterioration predictions 116 may vary from those depicted in the Figures and/or described herein. For example, in certain embodiments, initial deterioration predictions 112 may not be made until after the event predictions 114 are made. In such embodiments, one of the deterioration predictions 112 or the updated deterioration predictions 116 may not be necessary, and/or may be considered as being combined into a common block in the Figures. It will similarly be appreciated that other variations may also be implemented in various other embodiments of the present invention.

In one specific embodiment, the dynamic health model 102 uses a Poisson distribution to model the rate of damage accumulation in the mechanical device. The Poisson distribution provides the ability to accurately model the increase in damage accumulation that occurs over time in the mechanical device, e.g., the age dependent deterioration in the device. In this embodiment, the state estimator 104 can use a modified Kalman filter to estimate the state of damage accumulation in the mechanical device. Specifically, the Kalman filter is modified to produce an estimate of accumulated damage based on the Poisson distribution of the damage accumulation state. This estimation is valid up to the second moment in the Poisson distribution. Thus, the Kalman filter can be used to estimate the current state of damage accumulation in the device. When the current state has been estimated, the future state of damage accumulation can be predicted by integrating to a future time. Thus, the state estimator 104 can be used to determine when deterioration is predicted to justify removal and/or repair of the mechanical device.

Also in one specific embodiment, the device data 108 and the health model 102 are used by the state estimator 104 in generating estimates of the health states of the mechanical device, and then uses the estimates of the health states in generated the deterioration predictions 112 of FIG. 1. The state estimator 104 in this specific embodiment preferably also uses the event predictions 114 of FIG. 1 to update the estimates of the health states of the mechanical device, and then uses these updated estimates of the health states to generate the updated deterioration predictions 116 of FIG. 1.

In addition, in this specific embodiment, the event predictor 106 preferably uses a Markov Model in generating the event predictions 114 and in screening or filtering the event predictions out of a universe of potential events. Specifically, in one preferred embodiment, a Markov Model is also used to determine which to which of the predicted events are feasible, based upon information about the mechanical device as used by the Markov Model. For example, such information about the mechanical device may be obtained from manufacturer specifications, product manuals, literature in the field, from personal or other experience, and/or from any one or more of a number of other different sources. Preferably, only those predicted events that are determined to be feasible for the mechanical device are used in updating estimated values of the health states of the mechanical device, and to ultimately generate updated deterioration predictions.

As stated above, the health model 102 comprises a dynamic model that includes a plurality of evolving health states. These health states together describe the performance of the mechanical device. Several factors contribute to the evolution of the health states. These factors include damage accumulation, interaction between components in the device, deviation from design conditions, and the influence of continuous or discrete events. In general, the feasibility of prognosis will depend on how accurately the above factors are captured in the model. However, it should also be noted that as the complexity of a model increases, the difficulty in extracting values for the states in the model based on data from the device also increases.

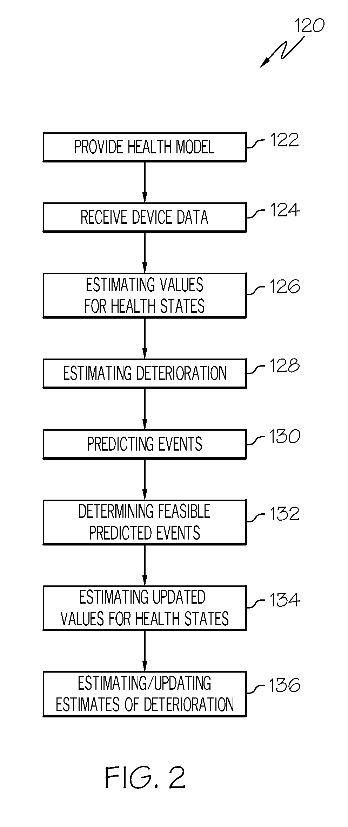

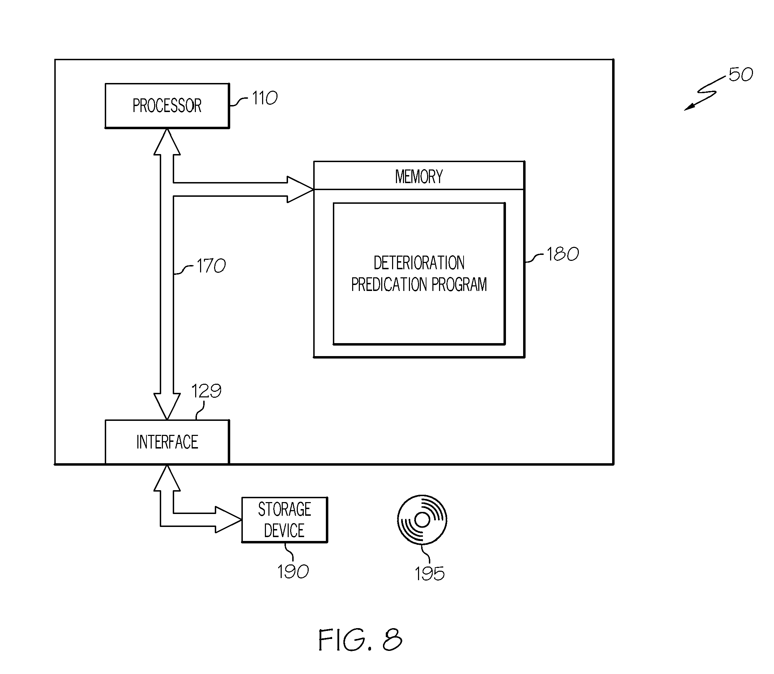

FIG. 2 depicts a flowchart of a high level description of a process 120 for estimating deterioration of a mechanical device and for predicting events that may have an effect on the mechanical device and/or the health states and/or deterioration thereof, in accordance with an exemplary embodiment of the present invention. As depicted in FIG. 2, the process 120 begins with step 122, in which a health model is provided. Preferably the health model corresponds with the health model 102 of FIG. 1. Also in a preferred embodiment, the health model is retrieved from a memory of a computer system, such as will be described further below in connection with FIG. 8. However, this may vary in other embodiments.

Next, device data is received (step 124). The device data pertains to specifications, operation, and/or other information of or pertaining to the mechanical device being examined. Preferably the device data corresponds with the device data 108 of FIG. 1. Also in a preferred embodiment, the device data is retrieved from a memory of a computer system, such as will be described further below in connection with FIG. 8, or directly or indirectly from the mechanical device, for example during operation of the mechanical device. However, this may vary in other embodiments.

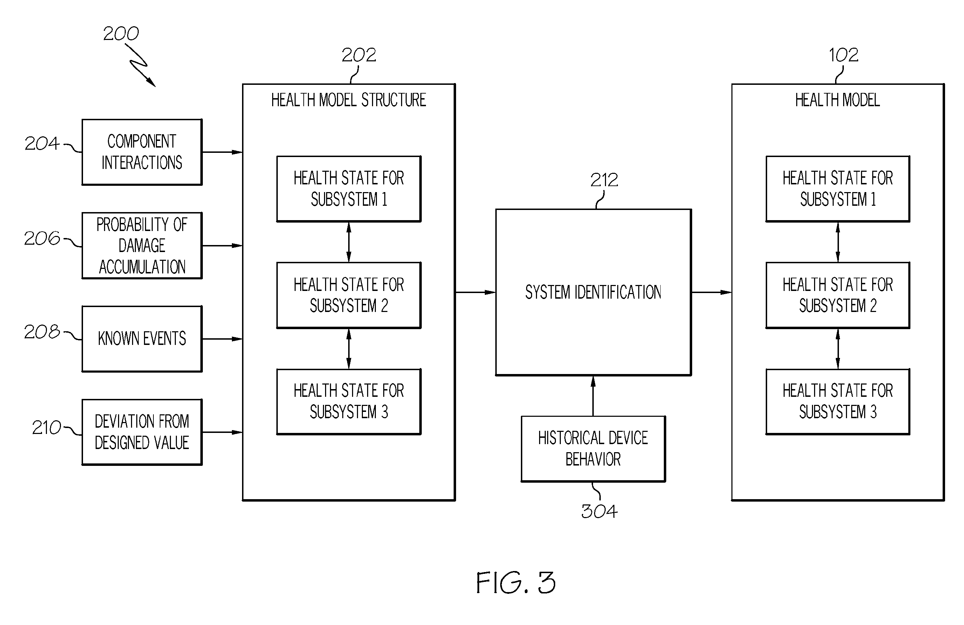

Various health states of the mechanical device are then estimated (step 126). In a preferred embodiment, the various health states are estimated as part of a health model for the mechanical device, such as the health model 102 of FIG. 1. A more detailed exemplary embodiment of a technique for estimating the health states of the mechanical device is provided in FIG. 3, and will be described further below in connection therewith. However, other techniques may also be used in certain other embodiments. Also in a preferred embodiment, the estimates of the various health states are generated by a processor of a computer system, such as will be described further below in connection with FIG. 8. However, this may also vary in other embodiments.

Next, one or more deterioration estimates are generated (step 128). In a preferred embodiment, the deterioration estimates are generated by the state estimator 104 of FIG. 1 based upon the health model 102 of FIG. 1, including the various health states estimated in step 126 described above. However, this may vary in other embodiments. Also in a preferred embodiment, the deterioration estimates are generated by a processor of a computer system, such as will be described further below in connection with FIG. 8. However, this may also vary in other embodiments.

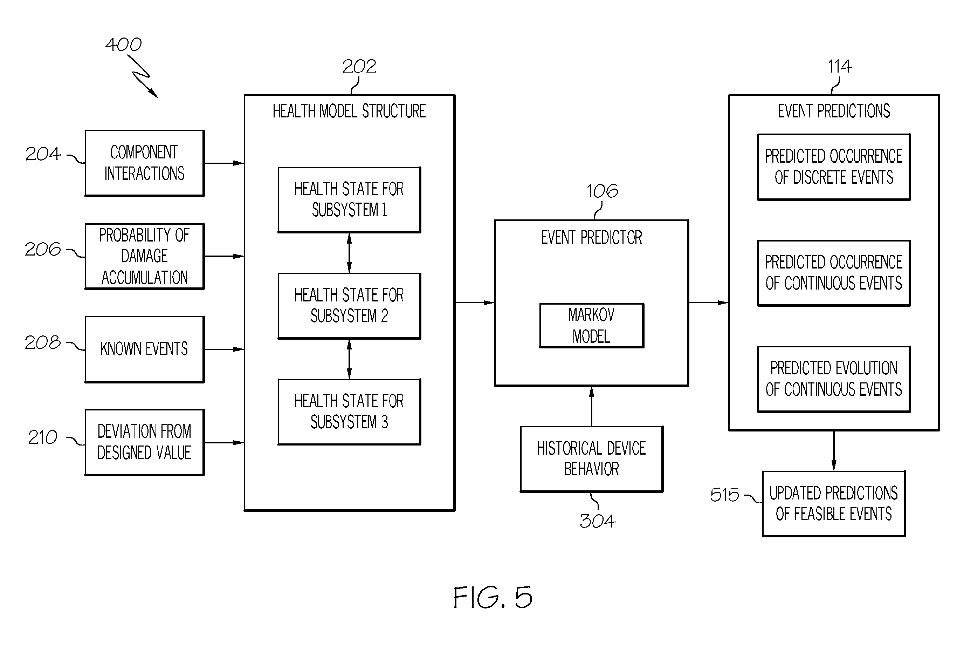

One or more event predictions are then made (step 130). In a preferred embodiment, the event predictions include predictions as to one or more possible discrete events and one or more possible continuous events, as well as predictions as to the evolution of one or more of the continuous events. However, this may vary in other embodiments. A more detailed exemplary embodiment of a technique for generating the event predictions is provided in FIG. 5, and will be described further below in connection therewith. However, other techniques may also be used in certain other embodiments. Also in a preferred embodiment, the event predictions are generated by a processor of a computer system, such as will be described further below in connection with FIG. 8. However, this may also vary in other embodiments.

Determinations are then made as to which of the predicted events are feasible for the mechanical device (step 132). In a preferred embodiment, these determinations are made based upon data, specifications, and/or other information pertaining to the mechanical device and/or the operation thereof, for example from manufacturer specifications, user manuals, literature in the field, user experience, and/or various other sources. Any non-feasible events are then disregarded, and are not used in further estimations of the health states and the deterioration of the mechanical device. In a preferred embodiment, these determinations as to event feasibility are generated by a processor of a computer system, such as will be described further below in connection with FIG. 8. However, this may also vary in other embodiments.

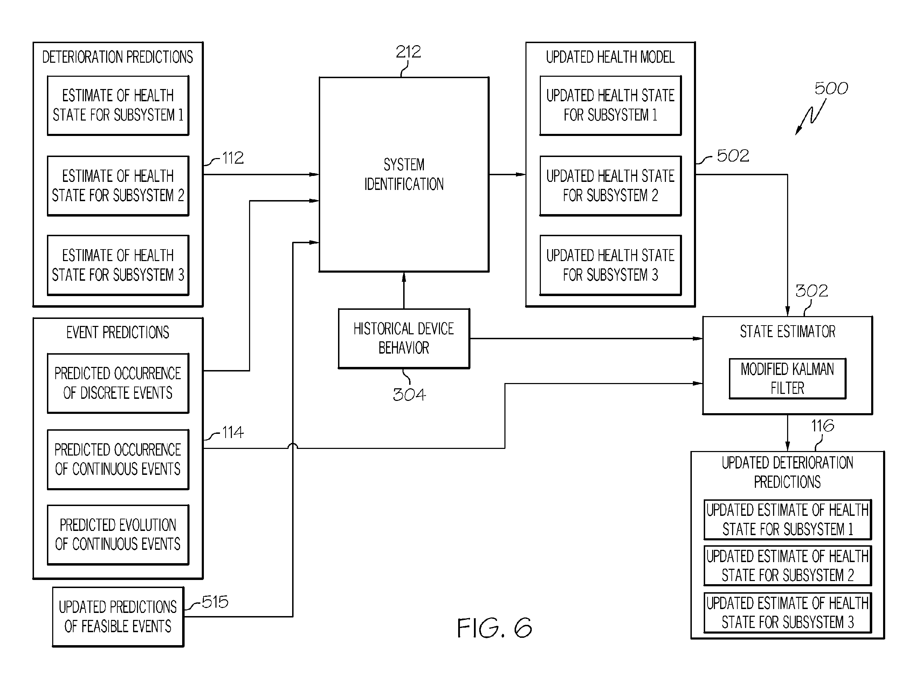

Next, updated values of the health states of the mechanical device are estimated (step 134). In a preferred embodiment, the updated values of the various health states are estimated as part of an updated health model for the mechanical device, such as an updated version of the health model 102 of FIG. 1. A more detailed exemplary embodiment of a technique for estimating the updated health states of the mechanical device is provided in FIG. 6, and will be described further below in connection therewith. However, other techniques may also be used in certain other embodiments. Also in a preferred embodiment, the estimates of the updated values of the various health states are generated by a processor of a computer system, such as will be described further below in connection with FIG. 8. However, this may also vary in other embodiments.

The updated values of the health states are then used in generating one or more updated deterioration estimates (step 136). In a preferred embodiment, the updated deterioration estimates are generated by the state estimator 104 of FIG. 1 based upon the health model 102 of FIG. 1, including the updated various health states estimated in step 134 described above, which in turn are based on the feasible predicted events as determined in steps 130 and 132 described above. However, this may vary in other embodiments. Also in a preferred embodiment, the deterioration estimates are generated by a processor of a computer system, such as will be described further below in connection with FIG. 8. However, this may also vary in other embodiments.

In addition, in certain embodiments, the deterioration estimates of steps 128 and 136 may be combined into a single step, and/or the estimating of the values for the health states of steps 126 and 134 may be combined into a single step, in certain embodiments. For example, in certain embodiments, the event predictions (step 130) and the feasibility determinations thereon (step 132) may be conducted before any health states and/or deterioration estimates are made. In such embodiments, estimates for the health states may be made for the first time in step 134, and/or the estimates of the deterioration of the mechanical device may be made for the first time in step 136, in certain embodiments. These and/or other steps may also vary in other respects in different embodiments of the present invention.

Turning now to FIG. 3, a schematic view of an exemplary technique 200 for creating a health model is illustrated. In one embodiment, the exemplary technique 200 may correspond with step 126 of the process 120 of FIG. 2, namely the estimating of values for the health states. However, this may vary in other embodiments.

In general, the exemplary technique 200 generates a health model 102 using a variety of inputs, historical device behavior and system identification. As described above, the health model 102 includes a plurality of evolving states. In the illustrated example, the plurality of evolving health states comprises health states for a three subsystems, *i.e.*, subsystem 1, subsystem 2, and subsystem 3 in a gas turbine engine. In the exemplary technique 200, four main inputs are used to define a health model structure 202. These inputs include component interactions 204, probability of damage accumulation 206, known events 208 and deviation from designed value 210. It should be noted that the number of health states in a health model, and the inputs used to define the health model structure can vary depending on the implementation used.

The inputs are used to define a health model structure 202. The health model structure 202 includes the plurality of health states that each describe the health of a subsystem. For example $x_1$, $x_2$, and $x_3$ and could represent the health of the subsystems 1, 2 and 3 respectively. Together, the health states $x_1$, $x_2$, and $x_3$ comprise a multifaceted health vector x(t). Again, this is just one example, and a typical health model structure 202 could include more or less health states. Irrespective of the dimensionality, the health vector x should satisfy the two properties to ensure physical significance. Firstly, the probability of a mechanical device in healthy condition, having known the x to be more than a threshold should tend to 1. Secondly, the probability of the occurrence of a failure mode, having known that x is below a threshold, should tend to 1.

The inputs 204, 206, 208 and 210 are contributors that together define the health model structure. In one example of the dynamic health model, the contributors are additive and can be expressed as:

$$\dot{x}(t) = Ax(t) + B\sum_{k=1}^{m}\left(u^k(t) - u^{k,0}(t)\right) + diag(\beta_t)(\theta(t) + Cv(t)$$

$$y(t) = x(t) + \varepsilon(t) \qquad\qquad\qquad \textbf{(1.)}$$

$$\theta \sim P(\lambda); \varepsilon \sim N(0, R)$$

Where *x(t)* is the health vector and $\dot{x}(t)$ is the vector rate of change of the health vector, A is an $n \times n$ system matrix, *B* is an $n \times p$ system matrix, *diag(*β *)* is an $n \times n$ diagonal matrix, and *C* is an $n \times r$ event sensitivity matrix. The indices N, P and R are respectively the dimension of health vector, input and events under consideration. Specifically *(u^k(t) - $u^{k,0}$(t))* is the deviation in the operating condition *$u^k$(t)* at the $k^{th}$ mode from the design condition $u^{k,0}$. Observation vector *y(t)* corresponds to the periodic device data obtained from the device at the end of $t^{th}$ cycle. The derivation of matrices A, B and C will be discussed in greater detail below. In the model of equation 1, intrinsic deterioration is modeled as a Poisson process with constant properties. Specifically, θ is a random variable that follows a Poisson distribution with a parameter λ. Also, ε is a measurement noise that follows a normal distribution.

It should be noted that the component interactions input 204 of FIG. 3 corresponds to the matrix A or the first term on the right hand side of equation 1. Likewise, the probability of damage accumulation input 206 corresponds to the third term of equation 1. The second term corresponds to the contribution made by deviation in the operating condition at 'm' modes or input 210. Matrix B is the weight or the sensitivity of this deviation. The continuous or discrete events input 208 corresponds to matrix beta or the third term of equation 1. Finally, the deviation for designed value input 208 corresponds to matrix C or the fourth term of equation 1.

Thus, the health model defined in equation 1 uses system matrices A and B to define specific instantiations of the health model. In general, a system matrix A defines the memory of the system, *i.e.*, how the current state of the system depends on the previous states. In addition, the non-diagonal elements of matrix A define the interaction between two or more components within the system. In one specific example, x is a 2-dimensional vector describing the health of the hot section and the load section of a gas turbine engine. In this example, the off-diagonal elements of matrix A define the health interaction between the hot and the cold section of the engine. In another example the hot and the load sections are assumed to be decoupled or non-interacting. This example would be modeled with a diagonal matrix A where are the other elements of the matrix are zero.

The system matrix B defines the sensitivity of the system to deviation from the design envelope $u^{k,0}$. In one specific example we define two modes within each operating cycle of a gas turbine engine, hence *k = 1, 2*. $u^{1,0}$ defines the design conditions like throttle setting, electrical load and altitude at engine idle, $u^{2,0}$ while defines the design conditions at max power. Failure of the gas turbine engine to operate at these design conditions during the *k'th* cycle produces a penalty proportional to *(u^k(t) - $u^{k,0}$)* which alters the rate of evolution of the health states. The matrix B is thus the sensitivity of the above mentioned deviation on the rate of evolution of the health states. In one specific example, matrix B is zero. In this example, the health states are not influenced by deviations from the design conditions. In one specific example, if the device operated at the design condition at the $k^{th}$ mode, there is no penalty. In one specific example, the penalty from mode 1 can be different from the penalty at mode 2. For example, a non-zero B matrix would be used when the penalty for deviating from the design condition at max power (mode 1) may be larger than the penalty for deviations at engine idle (mode 2).

Continuous or discrete events impacting the prognostic health state can result from line maintenance actions and/or abrupt faults within the system. An event can defined as abrupt action if the time duration between its initiation and manifestation is much smaller than the average cycle time. In simple terms, a fault is considered as a continuous or discrete event if the elapsed time between its initiation, and manifestation is much smaller than the duration of a typical cycle. The prognostic system does not differentiate between a line maintenance action and an abrupt fault. Both these result in a "DC" shift in the health vector.

In the example of the health model illustrated in equation 1, the "DC" shift in the state vector trajectory (sequence of x(t)) is taken as event sensitivity matrix C. To obtain this matrix, the normalized observation sequence (y) is denoised using a suitable digital filter and the jump in the observation vector at the occurrence of the event is calculated, which is then considered as event sensitivity. So determined, the matrix C determines the sensitivity of the health vectors to continuous or discrete events, such as abrupt faults of line maintenance actions. In one example, continuous or discrete events like oil cooler replacement and bleed duct rupture are considered while modeling health vectors related to a gas turbine engine, making v(t) a 2-dimensional vector. In other embodiments the model be designed to ignore the influences of line maintenance, and in those cases the matrix C can be omitted from the health model.

With the health model structure 202 defined, system identification 212 can be used to define a specific instance of the health model that corresponds to a particular device or type of device. In general, system identification 212 involves using historical device behavior to determine appropriate values for the system matrices that define interactions between states in the health model. In the specific example illustrated in equation 1, this involves determining appropriate values for matrices A and B. A variety of system identification can be used to determine the system matrices A and B. For example, they can be determined using least squares regression and/or maximum likelihood estimation technique. This generally involves using a high computation technique that is performed digitally by representing equation 1 discretized as:

$$x(t+1) = Ax(t) + B\sum_{k=1}^{m}\left(u^{k}(t) - u^{k,0}\right) + diag(\beta_t)\theta(t) + Cv(t) \quad \textbf{(2.)}$$

$$y(t) = x(t) + \varepsilon(t)$$

In one embodiment, the state vector and system matrix are estimated using uniform sampling criterion. This involves initialization of the system matrix and state vector, identification of system matrix A and B, estimation of state vector. For example, a least squares regression (LSR) technique can be used to initialize matrix A and B. The LSR technique starts with initializing the system matrix A and B. In one embodiment these matrices are initialized using random numbers between -1 and 1. The state vector is also initialized. In one example, the state vector is initialized to y(1). Given the initialization and using equation (2) one can obtain the expected observation. The cumulative square error of the actual and expected value is then minimized to get LSR estimates of A and B.

During this regression, an absence of other events is assumed. Thus, given a sequence of device observations y(1), y(2), ... y(N) and operating conditions at various modes $u^k(1)$, $u^k(2)$, ... $u^k(N)$ during which time there are no known continuous or discrete events, system matrix A and B are obtained by minimizing the joint error between multiple measurements. Absence of continuous or discrete events implies that v(t) will be identically zero for t = 1, 2, ... N.

In another embodiment, the system matrix A and B are obtained using maximum likelihood estimation technique. In this embodiment, a difference $e(t) \equiv (y(t) - \hat{y}(t))$ is defined as the innovation at t. In general, the magnitude of the innovation e(t) depends on the initial choice of matrix A, B and the value of state vector x(t). This process is continued, repeating the above steps for cycles t=1 to N, while collecting the innovation sequence. Next, assuming that the innovations come from a multivariate Gaussian distribution and obtain the log likelihood function for the innovation sequence. Then the estimate for the system matrices can be obtained using:

$$\left\lfloor \hat{A}, \hat{B} \right\rfloor = \min_{A,B} L \qquad \textbf{(3.)}$$

Where $\hat{A}$, $\hat{B}$ are the estimates of the system matrices A and B, and L is known as the loglikelihood function of the innovation. This value directly depends on the innovation sequence, hence, related to the state estimation with partially specified scheme. The initialization of the state vector x(t) and the state matrix A, B is important in obtaining accurate estimate of A and B.

The system dynamics may change with respect to time. In these cases it would generally be desirable to update system matrices A and B regularly. The frequency of the update of A and B would depend on a variety of factors. In one embodiment, a change in the distribution property of the innovation sequence can initiate re-calculation of the system matrix A and B. In another embodiment, major overhaul of the mechanical system may initiate re-calculation. For example, when the health model structure 102 is used to monitor a jet engine, the system matrices can be re-initiated every time the engine undergoes a major repair.

Thus, the exemplary technique 200 can instantiate a health model by creating a health model structure 202 and using least squares regression or maximum likelihood estimation technique to determine the system matrices for the health model 102. With the health model 102 so defined it can be used to predict deterioration in the mechanical device.

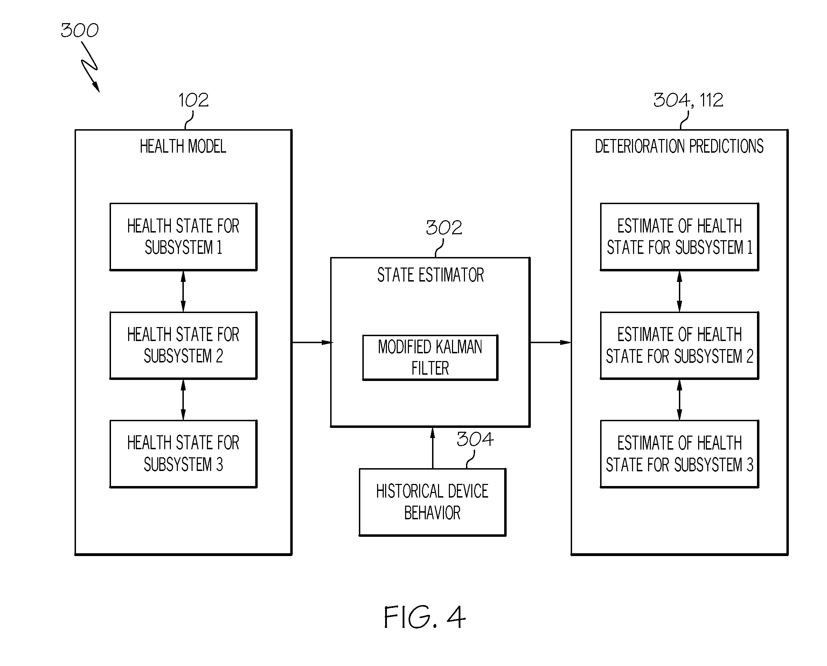

Turning now to FIG. 4, a technique 300 for predicting deterioration in a mechanical device is illustrated. In one embodiment, the technique 300 may correspond with step 128 of the process 120 of FIG. 2, namely the generation of deterioration estimates for the mechanical device. However, this may vary in other embodiments.

In general, the technique 300 uses device behavior 304 from the mechanical device to estimate the states of the dynamic health model 102. The resulting states of the dynamic health model 102 can then be used to evaluate deterioration in the mechanical device. Furthermore, the technique 300 can predict future deterioration by estimating future states in the health model 102.

In the technique 300, the state estimator 302 uses a modified Kalman filter. Specifically, the Kalman filter is modified to produce an estimate of accumulated damage based on the Poisson distribution of the damage accumulation state. This estimation is valid up to the second moment in the Poisson distribution. Thus, the Kalman filter can be used to estimate the current state of damage accumulation in the device. When the current state has been estimated, the future state of damage accumulation can be predicted by integrating to a future time. Thus, the state estimator 302 can be used to provide a deterioration prediction 304 that can be used to determine when to remove and/or repair the mechanical device.

To provide the deterioration prediction 304 the state estimator uses measured device behavior 304. This behavior can be measured using noisy sensors. Continuous or discrete events influencing the device are measured using external detection mechanism. These detection devices can range from simple threshold crossing to more complex multivariate pattern recognition algorithms. In one embodiment a linear Principal Components Analysis based observers are used to detect the events. A set of training samples are used to represent the normal condition and a measure is defined to detect bleed duct rupture events. In one of the embodiment the squared prediction error is taken as the measure and if it exceeds a predefined threshold, then event is presumed to have occurred, and is provided to the state estimator 302.

In one example, a 2-tuple clustering system is used to detect continuous or discrete events associated with turbine blade breakage. Such a system is described in US patent application 2005/0288901 by Dinkar Mylaraswamy et al, assigned to Honeywell International, Inc. In another example, a singular value decomposition is used to detect continuous or discrete events associated with bearing rubs. Such a system is described in US patent application 2005/0283909 to Dinkar Mylaraswamy et al, assigned to Honeywell International, Inc.

In one specific example, with the model defined as in equation 1, the state estimator 302 can be used to predict deterioration with the following procedure:

$$Given : \left\{ y(t), u^k(t), v(t) \right\}, \left\{ y(t-1), u^k(t-1), v(t-1) \right\}, \ldots$$
$$Settings : \lambda, R, \beta_t, u^{k,0} \qquad \qquad \textbf{(4.)}$$
$$Estimate : A, B, C, x(t), x(t + \delta_t)$$

Where ($t$-1) represents data from the previous cycle, ($t$-2) represents data from cycles in the past and $x(t + \delta_t)$ denotes the prediction of the health vector in the future within a prediction window $\delta_t$, having known $\{y(t), u^k(t), v(t)\}$.

The state estimator 302 can use a modified Kalman filter to estimate the state of damage accumulation in the mechanical device. In this framework, the state vector $x(t)$ is described by the first two moments and the prediction and updation equations of Kalman filter are re-derived using the concept of partially specified distributions. In this case, the random variable is transformed into another random variable and first two moments of the transformed random variable is used for deriving the Kalman equations. The recursive state estimation is performed in two steps, a state prediction using the value of the state at the previous time step and state updation using the new observation at the current time step.

With the rate of change determined using states in the model defined by equation 1, that rate of change can be used to predict future health of the mechanical system. In one example, the system and method estimates future states of the health model given by equation 1 by integrating to a select future time, with that time typically determined by the desired prognostic window. Since actual measurements are not available for the future, the future health state is instead be predicted by recursion of the state equation. Thus, the state estimator can be used to determine a repair window in which corrective action should be taken in anticipation of predicted future deterioration. The present formulation uses estimates of the future value of inputs and events for state prediction.

In one embodiment, a one-step-ahead prediction estimate In one embodiment, a one-step-ahead prediction estimate can be given by:

$$Ax^t{}_t + B\sum_{k=1}^{m} U^k{}_{t+1} + Cv_{t+1} + v \qquad (5.)$$

In the equation 5 the variable $x^t_t$ nothing but the updated state at time t, having the observation $y_t$. The variable $U^t_{t+1}$ is the future input deviation, $v_{t+1}$ indicates the event at flight cycle (t+1) and $v$ indicates the first moment of partially specified distribution. The value $x^t_{t+1}$ is integrated to equation (5) to get the two step ahead prediction $x^t_{t+2}$. This step is repeated till a predefined prognostic window(M) and at each step the previous prediction estimates are integrated in the state equation to get the next future estimates. In the current prediction as given in equation 5, one needs the future input deviations and events for predicting the health vectors. In one of the embodiment, future inputs remain the same as the most recent input deviation and no event occurs within the prognostic window. This means that, $U^t_{t+k} = U_t$ and $v_{t+k} = 0$ for k=1.....M. The prediction estimates directly depend on the system matrix, hence, A and B matrices are re-identified before predicting the health.

Thus, the technique 300 provides for predicting deterioration in a mechanical device is illustrated using device behavior 304 from the mechanical device to estimate the states of the dynamic health model 102. The resulting states of the dynamic health model 102 can then be used to evaluate deterioration in the mechanical device predict future deterioration by estimating future states in the health model 102.

Turning now to FIG. 5, a schematic view of an event detection technique 400 is provided, in accordance with an exemplary embodiment of the present invention. In one embodiment, the event detection technique 400 may correspond with steps 130 and 132 of the process 120 of FIG. 2, namely the generation of event predictions and the determination of feasible predicted events based on the event predictions. However, this may vary in other embodiments.

In general, the event detection technique 400 uses device behavior 304 from the mechanical device to predict one or more events that have an effect on the health states of the mechanical device, so that updated states of the dynamic health model 102 can then be generated. The resulting states of the dynamic health model 102 can then be used to evaluate deterioration in the mechanical device. Furthermore, the event prediction technique 400 can predict the occurrence of future events as well as the evolution of current and future events.

In the event prediction technique 400, the event predictor 106 uses a Markov Model along with measured device behavior 304. This behavior can be measured using noisy sensors. Continuous or discrete events influencing the device and/or the health states thereof can be predicted using information obtained from one or more external detection mechanisms. These detection mechanisms can range from simple threshold crossing to more complex multivariate pattern recognition algorithms. In one embodiment a linear Principal Components Analysis based observers are used in predicting the events. A set of training samples are used to represent the normal condition and a measure is defined to detect bleed duct rupture events. In one of the embodiment the squared prediction error is taken as the measure and if it exceeds a predefined threshold, then event is predicted to occur, for example corresponding to step 130 of the process 120 of FIG. 2.

Next, the event predictions 114 are used to generate updated predictions of feasible events 515, for example corresponding with step 132 of the process 120 of FIG. 2. Specifically, determinations are made using the Markov model as well as other information pertaining to the mechanical device, in order to determine which of the predicted events are feasible for the mechanical device. In a preferred embodiment, these determinations are made based upon data, specifications, and/or other information pertaining to the mechanical device and/or the operation thereof, for example from manufacturer specifications, user manuals, literature in the field, user experience, and/or various other sources. Any non-feasible events are then disregarded, and are not used in further estimations of the health states and the deterioration of the mechanical device. The resulting updated predictions of the feasible events 515 can then be utilized in updating and/or generating the estimates for the health states and/or the deteriorating of the mechanical device being examined.

Thus, the event prediction technique 400 provides for predicting discrete and continuous events using device behavior 304 from the mechanical device to predict the occurrence of discrete and continuous events and the evolution of continuous events that may have an effect on the mechanical device and/or the health states thereof, and in screening the predicting events based on feasibility with respect to the mechanical device being examined. The resulting event predictions 114 and, preferably, specifically the updated predictions of feasible events 515, can then be used to update the health states in the health model 102 and the deterioration estimates based at least in part thereon.

Turning now to FIG. 6, a schematic view of an exemplary updating technique 500 for creating an updated version of a health model is illustrated. In one embodiment, the exemplary updating technique 500 may correspond with step 134 and/or step 136 of the process 120 of FIG. 2, namely the estimating of updating values for the health states and/or the generation of updated estimates of deterioration for the mechanical device. However, this may vary in other embodiments.

In general, the updating technique 500 generates an updated health model 502 based using a variety of inputs, including the deterioration predictions 112 and the event predictions 114 and/or the updated prediction of feasible events 515, along with historical device behavior 304 and system identification 212. In certain embodiments, the updated health model 502 may be generated without all of the above-described inputs, instead relying more heavily on the event predictions 114. However, this may vary in other embodiments. For example, in one preferred embodiment, only the updated prediction of feasible events 515 is utilized, while all other of the event predictions 114 are ignored as a result of a determined lack of a required degree of feasibility. In other embodiments, all of the event predictions 114, or a larger subset thereof, may be used. Various other different inputs may also be used in other embodiments, along with other variations of this and/or other steps.

In a preferred embodiment, the updating technique 500 is similar in methodology to the exemplary technique 200 of FIG. 3 and described above in connection therewith, but also incorporates any effects that the event predictions 114 and/or the updated prediction of feasible events 515 are likely to cause on the various health states for the mechanical device. Specifically, in a preferred embodiment, various event matrices are used to represent the predicted events that are determined to be feasible for the particular mechanical device being examined. These are then processed through a Kalman filter to determining resulting shifts or gains in vectors representing the various health states of the mechanical device being examined, which are then used to derive the updated health model structure 502 incorporating the values of the various updated health states.

Similar to the discussion above in connection with FIG. 3, the updated health model 502 includes a plurality of evolving states. In the illustrated example, the plurality of evolving health states similarly comprises health states for a three subsystems, $i.e.$, subsystem 1, subsystem 2, and subsystem 3 in a gas turbine engine. It should be noted that the number of health states in a health model, and the inputs used to define the health model structure can vary depending on the implementation used. The inputs are used to define an updated health model structure 502 using the same mathematical techniques described above in connection with the process 120 of FIG. 2, but also using the additional inputs from the event predictions 114 and the deterioration predictions 112. However, this may vary in other embodiments, for example in that other techniques may also be used.

The results from the updated health model 502 are then provided to the state estimator 302 for determining the updated deterioration predictions 116. In addition, in one preferred embodiment, the historical device behavior data 304 and the event predictions 114 are also provided to the state estimator 302 for processing in determining the updated deterioration predictions 116. However, in other embodiments this may be unnecessary, for example in that the historical device behavior data 304 and/or the event predictions 114 may only be indirectly processed via their effects on the updated health model 502. While the inputs provided to the state estimator 302 during the updating technique 500 may vary, the state estimator 302 preferably generates the updated deterioration predictions 116 in the updating technique 500 using similar mathematical techniques as described above in connection with the technique 300 of FIG. 4, for example using a modified Kalman filter, in accordance with an exemplary embodiment of the present invention. However, this may also vary in other embodiments.

In one application, the deterioration and event prediction system is used to monitor a turbine auxiliary power unit (APU). An APU is a relatively small turbine engine used primarily for starting the propulsion engines, providing bleed air for the environment, and providing electricity to the aircraft. In general, the APU can be considered to the combination of two broad sub-systems, namely a hot section and a load section. The deterioration and event prediction system can then be used estimate the health of these two sections. This would involve the use of a two-dimensional health vector in the health model. In this application, the operating envelope is defined at max power, hence k = 1. Specifically deviations from design conditions are calculated for ambient pressure, temperature, generator load and guide vane position. Periodic observations collected from the APU include exhaust gas temperature, bleed pressure, bleed flow and oil temperature.

In this example, the model for the APU a cycle may include the time interval between startup and shutdown, and modes within the cycle can include idling, acceleration, cruise and deceleration. The prognostic state at each cycle $t$ evolves as a function of the operating conditions experienced at each operating mode within this cycle, intrinsic damage accumulation and discrete maintenance actions and faults that occurred.

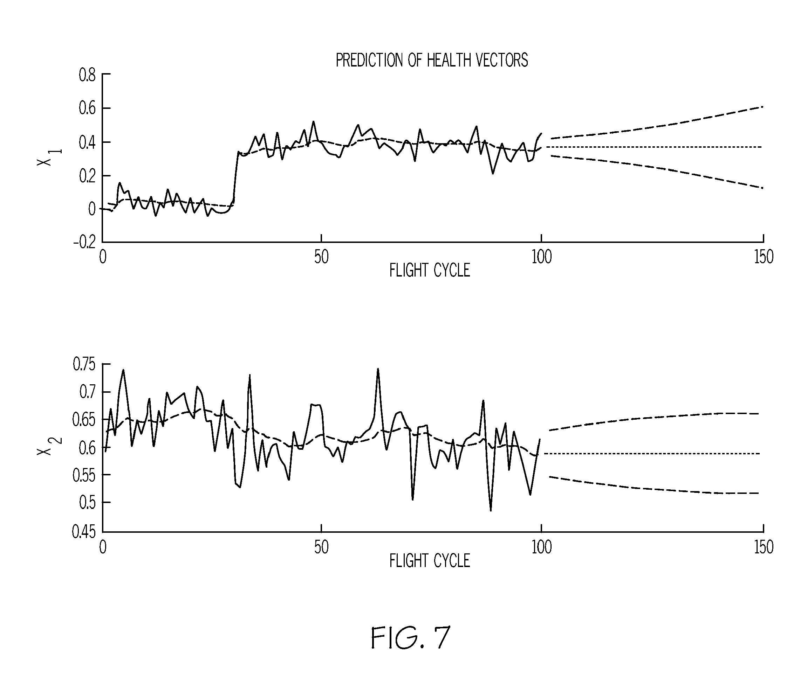

Turning now to FIG. 7, a graph 700 illustrates the prognostic system incorporating the prediction of continuous and discrete events in accordance exemplary embodiments of the above-described methods and processes. The health vector $X_1$ represents the health of the load section of the APU, and the health vector $X_2$ represents the health of the hot section. A continuous or discrete event has occurred at time index one hundred, which was correctly estimated and implemented by the estimator. The dotted lines indicate the predicted health and the dashed line indicates the 95% confidence cone for a prognostic window of one hundred and fifty flight cycles. The solid smooth line indicates the estimated health. The random fluctuating signal is the observation sequence.

In one embodiment, the model of a typical mechanical system is hybrid in nature, meaning that the model considers both the continuous evolution of states and discrete jumps in states as well as the effect thereon of predicted continuous evolution of events and the discrete occurrence of events. Additionally, the model includes the health state $diag(\beta)$ driven by a Poisson process. To solve the model, a maximum likelihood (ML) based estimator is used for system identification and recursive Bayesian state estimation.

The deterioration and event prediction system and the various methods and processes depicted in the Figures and described above in connection therewith can be implemented in a wide variety of platforms. Turning now to FIG. 8, an exemplary computer system 50 is illustrated for implemented the deterioration and event prediction system and the various methods and processes described above and depicted in the Figures. Various other systems may also be used in various embodiments.

Computer system 50 illustrates the general features of a computer system that can be used to implement the invention. Of course, these features are merely exemplary, and it should be understood that the invention can be implemented using different types of hardware that can include more or different features. It should be noted that the computer system can be implemented in many different environments, such as onboard an aircraft to provide onboard diagnostics, or on the ground to provide remote diagnostics. The exemplary computer system 50 includes a processor 110, an interface 129, a storage device 190, a bus 170 and a memory 180. In accordance with the preferred embodiments of the invention, the computer system 50 includes and/or implements an event and deterioration prediction program, for example stored in the memory 180 of the computer system 50.

The processor 110 performs the computation and control functions of the system 50 and performs the various steps of the methods and processes depicted in the Figures and described herein in connection therewith. The processor 110 may comprise any type of processor, include single integrated circuits such as a microprocessor, or may comprise any suitable number of integrated circuit devices and/or circuit boards working in cooperation to accomplish the functions of a processing unit. In addition, processor 110 may comprise multiple processors implemented on separate systems. In addition, the processor 110 may be part of an overall vehicle control, navigation, avionics, communication or diagnostic system. During operation, the processor 110 executes the programs contained within memory 180 and as such, controls the general operation of the computer system 50.

Memory 180 can be any type of suitable memory. This would include the various types of dynamic random access memory (DRAM) such as SDRAM, the various types of static RAM (SRAM), and the various types of non-volatile memory (PROM, EPROM, and flash). It should be understood that memory 180 may be a single type of memory component, or it may be composed of many different types of memory components. In addition, the memory 180 and the processor 110 may be distributed across several different computers that collectively comprise system 50. For example, a portion of memory 180 may reside on the vehicle system computer, and another portion may reside on a ground based diagnostic computer.

The bus 170 serves to transmit programs, data, status and other information or signals between the various components of the event prediction system 100. The bus 170 can be any suitable physical or logical means of connecting computer systems and components. This includes, but is not limited to, direct hard-wired connections, fiber optics, infrared and wireless bus technologies.

The interface 129 allows communication to the system 50, and can be implemented using any suitable method and apparatus. It can include a network interfaces to communicate to other systems, terminal interfaces to communicate with technicians, and storage interfaces to connect to storage apparatuses such as storage device 190. Storage device 190 can be any suitable type of storage apparatus, including direct access storage devices such as hard disk drives, flash systems, floppy disk drives and optical disk drives. As shown in FIG. 8, storage device 190 can comprise a disc drive device that uses disks 195 to store data.

In accordance with the preferred embodiments of the invention, the computer system 50 includes an event and deterioration prediction program. Specifically during operation, the event and deterioration prediction program is stored in memory 180 and executed by processor 110. In a preferred embodiment, the event and deterioration prediction program performs, and/or instructs a processor and/or computer system implementing the event and deterioration prediction program, to implement the various steps of the various methods and processes depicted in the Figures and described herein in connection therewith. When being executed by the processor 110, the event and deterioration prediction program receives data from the device being monitored and generates event and deterioration predictions from that data. In one preferred embodiment, the event and deterioration prediction program can be sold and utilized as a program product that includes the event and deterioration prediction program along with a computer readable signal bearing media device that bears the event and deterioration prediction program. However, this may vary in other embodiments.

As one example implementation, the deterioration and event prediction system can operate on data that is acquired from the mechanical system (e.g., aircraft) and periodically uploaded to an internet website. The event and deterioration prediction analysis is performed by the web site and the results are returned back to the technician or other user. Thus, the system can be implemented as part of a web-based diagnostic and prognostic system. However, this may vary in other embodiments.

It should be understood that while the present invention is described here in the context of a fully functioning computer system, those skilled in the art will recognize that the mechanisms of the present invention are capable of being distributed as a program product in a variety of forms, and that the present invention applies equally regardless of the particular type of computer-readable signal bearing media used to carry out the distribution. Examples of signal bearing media include: recordable media such as floppy disks, hard drives, memory cards and optical disks (e.g., disk 195), and transmission media such as digital and analog communication links, among various other potential types of signal bearing media.

In addition, it will be appreciated that the methods, systems, program products, and devices described above may vary in other embodiments, and/or may be implemented in connection with an/or along with any number of other different types of methods, systems, program products, and/or devices. It will be similarly appreciated that while the methods, systems, program products, and devices are described above as being used in connection with auxiliary power units, these methods, systems, program products, and devices may also be used and/or implemented in connection with any number of other different types of apparatus, devices, systems, and/or other applications.

The embodiments and examples set forth herein were presented in order to best explain the present invention and its particular application and to thereby enable those skilled in the art to make and use the invention. However, those skilled in the art will recognize that the foregoing description and examples have been presented for the purposes of illustration and example only. The description as set forth is not intended to be exhaustive or to limit the invention to the precise form disclosed. Many modifications and variations are possible in light of the above teaching without departing from the spirit of the forthcoming claims.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

**Claims**

1.   A method (120) of predicting deterioration in a mechanical device, the method (120) comprising the steps of:

   a) providing a health model (102) for the mechanical device, the health model (102) including a plurality of health states for modeling the mechanical device (122),
   b) receiving device data (108) for the mechanical device (124);
   c) estimating values for the plurality of health states (112), based on the device data (108) (126);
   d) predicting one or more events (114) based on the health model (102) and the device data (108), each of the one or more events (114) affecting one or more of the plurality of health states (130); and
   e) generating a prediction of deterioration in the mechanical device from the estimated values for the plurality of health states and the one or more predicted events (114) (132-136).

2.   The method (120) of Claim 1, further comprising the step of:

   f) updating the estimated values for the plurality of health states, based on the one or more predicted events (114) (132-136).

3.   The method (120) of Claim 2, further comprising the step of:

   (g) generating the predictions of deterioration in the mechanical device based at least in part on the updated estimated values of the plurality of health states (132-136).

**4.** The method (120) of Claim 1, further comprising the step of:

f) determining which of the one or more predicted events (114) are feasible and which are not feasible, based on information regarding the mechanical device (132),

wherein in step (e) the prediction of deterioration in the mechanical device from the estimated values for the plurality of health states and the one or more predicted events (114) is not based upon any of the one or more predicted events (114) that are determined to be not feasible (132-136).

**5.** A program product (180, 190, 195) comprising:

a. an event and deterioration prediction program configured to at least facilitate:

providing a health model (102) for the mechanical device, the health model (102) including a plurality of health states for modeling the mechanical device,
receiving device data (108) for the mechanical device;
estimating values for the plurality of health states, based on the device data (108);
predicting one or more events (114) based on the health model (102) and the device data (108), each of the one or more events (114) affecting one or more of the plurality of health states; and
generating a prediction of deterioration in the mechanical device from the estimated values for the plurality of health states and the one or more predicted events (114); and

b. a computer-readable signal bearing media (190, 195) bearing the event and deterioration prediction program.

**6.** The program product (180, 190, 195) of Claim 5, wherein the deterioration predicting program is further configured to at least facilitate:

updating the estimated values for the plurality of health states, based on the one or more predicted events (114); and
generating the predictions of deterioration in the mechanical device based at least in part on the updated estimated values of the plurality of health states.

**7.** The program product (180, 190, 195) of Claim 5, wherein:

the deterioration predicting program is further configured to at least facilitate determining which of the one or more predicted events (114) are feasible and which are not feasible, based on information regarding the mechanical device; and
the deteriorating prediction program's prediction of the deterioration in the mechanical device from the estimated values for the plurality of health states and the one or more predicted events (114) is not based upon any of the one or more predicted events (114) that are determined to be not feasible.

**8.** A deterioration and event prediction system (50) for predicting deterioration in a mechanical device, the system (50) comprising:

a memory (180) configured to store a health model (102) for the mechanical device, the health model (102) including a plurality of health states for modeling the mechanical device, and
a processor (110) coupled to the memory (180) and configured to at least facilitate:

retrieving the health model (102) from the memory (180);
receiving device data (108) for the mechanical device;
estimating values for the plurality of health states, based on the device data (108);
predicting one or more events (114) based on the health model (102) and the device data (108), each of the one or more events (114) affecting one or more of the plurality of health states; and
generating a prediction of deterioration in the mechanical device from the estimated values for the plurality of health states and the one or more predicted events (114).

**9.** The deterioration and event prediction system (50) of Claim 8, wherein the processor (110) is further configured to at least facilitate:

updating the estimated values for the plurality of health states, based on the one or more predicted events (114); and

generating the predictions of deterioration in the mechanical device based at least in part on the updated estimated values of the plurality of health states.

10. The deterioration and event prediction system (50) of Claim 8, wherein:

the processor (110) is further configured to at least facilitate determining which of the one or more predicted events (114) are feasible and which are not feasible, based on information regarding the mechanical device; and the processor (110)'s prediction of the deterioration in the mechanical device from the estimated values for the plurality of health states and the one or more predicted events (114) is not based upon any of the one or more predicted events (114) that are determined to be not feasible.

FIG. 1

120

PROVIDE HEALTH MODEL — 122

↓

RECEIVE DEVICE DATA — 124

↓

ESTIMATING VALUES
FOR HEALTH STATES — 126

↓

ESTIMATING DETERIORATION — 128

↓

PREDICTING EVENTS — 130

↓

DETERMINING FEASIBLE
PREDICTED EVENTS — 132

↓

ESTIMATING UPDATED
VALUES FOR HEALTH STATES — 134

↓

ESTIMATING/UPDATING
ESTIMATES OF DETERIORATION — 136

FIG. 2

200

202

102

HEALTH MODEL STRUCTURE

HEALTH MODEL

204 — COMPONENT INTERACTIONS

206 — PROBABILITY OF DAMAGE ACCUMULATION

208 — KNOWN EVENTS

210 — DEVIATION FROM DESIGNED VALUE

HEALTH STATE FOR SUBSYSTEM 1

HEALTH STATE FOR SUBSYSTEM 2

HEALTH STATE FOR SUBSYSTEM 3

212

SYSTEM IDENTIFICATION

HISTORICAL DEVICE BEHAVIOR

304

HEALTH STATE FOR SUBSYSTEM 1

HEALTH STATE FOR SUBSYSTEM 2

HEALTH STATE FOR SUBSYSTEM 3

FIG. 3

FIG. 4

EP 2 141 560 A2

400

202

114

**HEALTH MODEL STRUCTURE**

204 — COMPONENT INTERACTIONS

206 — PROBABILITY OF DAMAGE ACCUMULATION

208 — KNOWN EVENTS

210 — DEVIATION FROM DESIGNED VALUE

HEALTH STATE FOR SUBSYSTEM 1

HEALTH STATE FOR SUBSYSTEM 2

HEALTH STATE FOR SUBSYSTEM 3

106

**EVENT PREDICTOR**

MARKOV MODEL

HISTORICAL DEVICE BEHAVIOR

304

**EVENT PREDICTIONS**

PREDICTED OCCURRENCE OF DISCRETE EVENTS

PREDICTED OCCURRENCE OF CONTINUOUS EVENTS

PREDICTED EVOLUTION OF CONTINUOUS EVENTS

515 — UPDATED PREDICTIONS OF FEASIBLE EVENTS

FIG. 5

FIG. 6

500

DETERIORATION PREDICTIONS
- ESTIMATE OF HEALTH STATE FOR SUBSYSTEM 1
- ESTIMATE OF HEALTH STATE FOR SUBSYSTEM 2
- ESTIMATE OF HEALTH STATE FOR SUBSYSTEM 3

112

EVENT PREDICTIONS
- PREDICTED OCCURRENCE OF DISCRETE EVENTS
- PREDICTED OCCURRENCE OF CONTINUOUS EVENTS
- PREDICTED EVOLUTION OF CONTINUOUS EVENTS

114

UPDATED PREDICTIONS OF FEASIBLE EVENTS

515

SYSTEM IDENTIFICATION

212

HISTORICAL DEVICE BEHAVIOR

304

UPDATED HEALTH MODEL
- UPDATED HEALTH STATE FOR SUBSYSTEM 1
- UPDATED HEALTH STATE FOR SUBSYSTEM 2
- UPDATED HEALTH STATE FOR SUBSYSTEM 3

502

STATE ESTIMATOR
MODIFIED KALMAN FILTER

302

116

UPDATED DETERIORATION PREDICTIONS
- UPDATED ESTIMATE OF HEALTH STATE FOR SUBSYSTEM 1
- UPDATED ESTIMATE OF HEALTH STATE FOR SUBSYSTEM 2
- UPDATED ESTIMATE OF HEALTH STATE FOR SUBSYSTEM 3

PREDICTION OF HEALTH VECTORS

FIG. 7

EP 2 141 560 A2

FIG. 8

EP 2 141 560 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050288901 A, Dinkar Mylaraswamy
- US 20050283909 A, Dinkar Mylaraswamy